# EUROPEAN PATENT APPLICATION

(11) **EP 1 243 949 A1**
(43) Date of publication of application: **25.09.2002**
(21) Application number: 01440070.9
(22) Date of filing: 14.03.2001
(51) Int. Cl.: G02B 6/16, G02B 6/293

(54) **Optical filter device, method for tuning and communication system**

(71) Applicant: ALCATEL, 75008 Paris (FR)
(72) Inventor: Bakhti, Fatima, 91120 Palaiseau (FR); Poussière, Fabrice, 91300 Massy (FR); De Barros, Carlos, 92100 Boulogne-Billancourt (FR)
(74) Representative: Rausch, Gabriele, Dr.

(57) **Abstract**

The present invention relates to wavelength-tunable optical grating devices, to a method to tune the wavelength of the device and to communication systems using them. In particular, it concerns a tunable optical filter device with a support frame for supporting a length of optical waveguide, a waveguide grating comprising a length of optical waveguide including an optical grating where two different long period gratings are written in the same part of the length of optical waveguide, the grating is attached to the support at the opposite sides of the grating and at least one mean influencing the optical waveguide by temperature or strain.

## Description

### FIELD OF THE INVENTION

The present invention relates to a special designed optical grating devices, to a method to tune the wavelength and/or the spectral response of the device and to communication systems using them. In particular, it concerns a tunable optical filter device with a support frame for supporting a length of optical waveguide, a waveguide grating comprising a length of optical waveguide including an optical grating where two different long period gratings are written in the same part of the length of optical waveguide, the grating is attached to the support at the opposite sides of the grating and at least one mean influencing the optical waveguide by temperature or strain.

### BACKGROUND OF THE INVENTION

Optical fiber gratings are the key components in modern telecommunication systems. Optical fibers are thin strands of glass capable of transmitting an optical signal containing a large amount of information over long distances with very low loss. It is a small diameter waveguide comprising a core having a first index of refraction surrounded by a cladding having a second (lower) index of refraction or more. Typical optical fibers are made of high purity silica with minor concentrations of dopants to control the index of refraction. Optical fiber gratings are important elements for selectively controlling specific wave-lengths of light within optical fiber communication systems. Gratings are used in controlling the paths or properties of light traveling within the fibers. Such gratings include Bragg gratings and long period gratings. Gratings typically comprise a body of material and a plurality of substantially equally spaced grating elements such as index perturbations, slits or grooves. A typical Bragg grating comprises a length of optical waveguide, such as optical fiber, including a plurality of perturbations in the index of refraction substantially equally spaced along the waveguide length. These perturbations selectively reflect light of wavelength λ equal to twice the spacing .λ between successive perturbations times the effective refractive index, i.e. λ.=2n_{eff}λ, where λ is the vacuum wavelength and n_{eff} is the effective refractive index of the propagating mode. The remaining wavelengths pass essentially unimpeded. Such Bragg gratings have found use in a variety of applications including filtering, adding and dropping signal channels, stabilization of semiconductor lasers, reflection of fiber amplifier pump energy, and compensation for waveguide dispersion, amplifier gain equalizers. Waveguide Bragg gratings are conveniently fabricated by doping a waveguide core and sometimes part of the cladding with one or more dopants sensitive to ultraviolet light, e.g. germanium or phosphorous, and exposing the waveguide at spatially periodic intervals to a high intensity ultraviolet light source. The ultra-violet light interacts with the photosensitive dopant to produce long-term permanent perturbations in the local index of refraction. The appropriate periodic spacing of perturbations to achieve a conventional grating can be obtained by use of a physical mask, a phase mask, or a pair of interfering beams. A difficulty with conventional Bragg gratings is that they filter only a fixed wavelength. Each grating selectively reflects only light in a narrow bandwidth centered around λ.=2neff λ. However in many applications, such as wavelength division multiplexing (WDM), it is desirable to have a reconfigurable grating whose wavelength response can be controllably altered. One attempt to make a tunable waveguide Bragg grating uses a piezoelectric element to strain the grating. The difficulty with this approach is that the strain produced by piezoelectric actuation is relatively small, limiting the tuning range of the device. Moreover, it requires a continuous application of electrical power with relatively high voltage, e.g., approximately 100 volts.

Long-period fiber grating devices provide wavelength dependent loss and may be used for spectral shaping. A long-period grating couples optical power between two co-propagating modes with very low back reflections. A long-period grating typically comprises a length of optical waveguide wherein a plurality of refractive index perturbations are spaced along the waveguide by a periodic distance λ' which is large compared to the wavelength λ of the transmitted light. In contrast with conventional Bragg gratings, long-period gratings use a periodic spacing λ' which is typically at least 10 times larger than the transmitted wavelength, i.e. λ'.>10 λ. Typically λ' is in the range 15-1500 micrometers, and the width of a perturbation is in the range 1/5. λ' to 4/5. λ'.
In some applications, such as chirped gratings, the spacing λ' can vary along the length of the grating. Long-period fiber gratings selectively remove light at specific wavelengths by mode conversion. The spacing λ' of the perturbations is chosen to shift transmitted light in the region of a selected peak wavelength λₚ from a guided mode into a non guided mode, thereby reducing in intensity a band of light centered about the peak wavelength λₚ. Alternatively, the spacing λ' can be chosen to shift light from one guided mode to a second guided mode (typically a higher order mode), which is substantially stripped off the fiber to provide a wavelength dependent loss. Such devices are particularly useful for equalizing amplifier gain at different wavelengths of an optical communications system. A difficulty with conventional long-period gratings, however, is that their ability to dynamically equalize amplifier gain is limited, because they filter only a fixed wavelength acting as wavelength-dependent loss elements. Each long-period grating with a given periodicity λ' selectively filters light in a limited bandwidth centered around the peak wavelength of coupling, λₚ. This wavelength is determined by
λₚ =(n_{g} -n_{ng})./ λ', where n_{g} and n_{ng} are the effective indices of the core and the cladding modes, respectively. The value of n_{g} is dependent on the core and cladding refractive index while n_{ng} is dependent on core, cladding and air indices.
The width of the filter can be up to 100 nm, depending on the length of the filter. The shorter the filter is as broader the bandwidth is.

In the future, multi-wavelength communication systems will require reconfiguration and reallocation of wavelengths among the various nodes of a network depending on user requirements, e.g., with programmable add/drop elements. This reconfiguration will impact upon the gain of the optical amplifier. As the number of channels passing through the amplifier changes, the amplifier will start showing deleterious peaks in its gain spectrum, requiring modification of the long-period grating used to flatten the amplifier. Modifying the long-period grating implies altering either the center wavelength of the transmission spectrum or the depth of the coupling. Thus, there is a need for reconfigurable long-period gratings whose transmission spectra can be controlled as a function of the number of channels and power levels transmitted through an amplifier or due to the fact that additional length of fiber in the system in case of repeater maintenance will change the slope of the amplifier. It is desirable to have long-period gratings which, upon activation, can be made to dynamically filter other wavelengths (i.e., besides λₚ). It is also desirable to be able to selectively filter a broad range of wavelengths. Further, long period gratings can be useful for suppressing amplifier spontaneous emission (ASE), and can also be used as tunable loss element for filtering out undesirable remnant signals from communication channel Add/Drop operations. A related difficulty with conventional gratings is their temperature dependence. In the Bragg gratings, both n_{eff} and λ are temperature dependent, with the net temperature dependence for a grating in silica-based fiber exemplarily being about +0.0115 nm/°C. for λ.=1550 nm. The temperature-induced shift in the reflection wavelength typically is primarily due to the change in n_{eff} with temperature. The thermal expansion-induced change in λ. is responsible for only a small fraction of the net temperature dependence of a grating in a conventional SiO₂ -based fiber. While such a temperature-induced wavelength shift can be avoided by operating the grating device in a constant temperature environment, it causes additional complications with a need to add an oven/refrigerator system. In addition, an accurate temperature-control and continuous use of power are called for.
U.S. Pat. No. 5,042,898 by W. W. Morey et al. discloses apparatus that can provide temperature compensation of a fiber Bragg grating. The apparatus comprises two juxtaposed compensating members that differ with respect to the coefficient of thermal expansion (CTE). Both members have a conventional positive CTE. The fiber is rigidly attached to each of the members, with the grating disposed between two attachment points. The apparatus is typically considerably longer than the grating, e.g. at least 40% longer than the grating device, thus making the temperature compensated package undesirably large. In addition, the temperature compensating packages can have a substantial variation of reflection wavelength from one package to another because of the variability in the grating periodicity as well as minute variations, during package assembly, in the degree of pre-stress applied to each grating or minute variations in the attachment locations.
It is also known from US 6,148,128 to use a device and an applying strain on the Bragg grating to compensate the temperature behavior of the grating. Therefore the device can stabilize the spectrum of the grating.

### SUMMARY OF THE INVENTION

The invention shows a device which can provide a communication system with the required tunable filter function. The wavelength shifts of the spectra of the device are made by temperature or strain. The new approach uses an special designed long period grating
The advantage of this device is the easy use of one single fiber piece for a tunable optical filter. To achieve the required result it is not longer necessary to combine separate filter devices with different Bragg gratings. The invention uses one single device with a concatenation of at least two different long period gratings with different strain- or /and temperature sensitivity

### DESCRIPTION OF THE DRAWINGS

The advantages, nature and additional features of the invention will appear more fully upon consideration of the illustrative embodimants described in the accompanying drawings. In the drawings:
Fig. 1 and 2 schematic illustrate the device with applied strain
Fig. 3 and 4 schematic illustrate the device with applied temperature tuning Fig. 5 shows an example of the spectrum of two gratings used for tuning with strain
Fig. 6 illustrates the resulting spectrum of two gratings.
Fig. 7 shows the comparison of the spectrum of a filter with and without phase shift inserted in the middle of the grating
Fig. 8 shows the influence of the phase shift
Fig. 9 illustrates the changes in filter spectrum for a gratings containing a phase shift in dependence from the phase shift.
Fig.10: illustrate as an example the capability of the tunable phase shift

### DETAILED DESCRIPTION

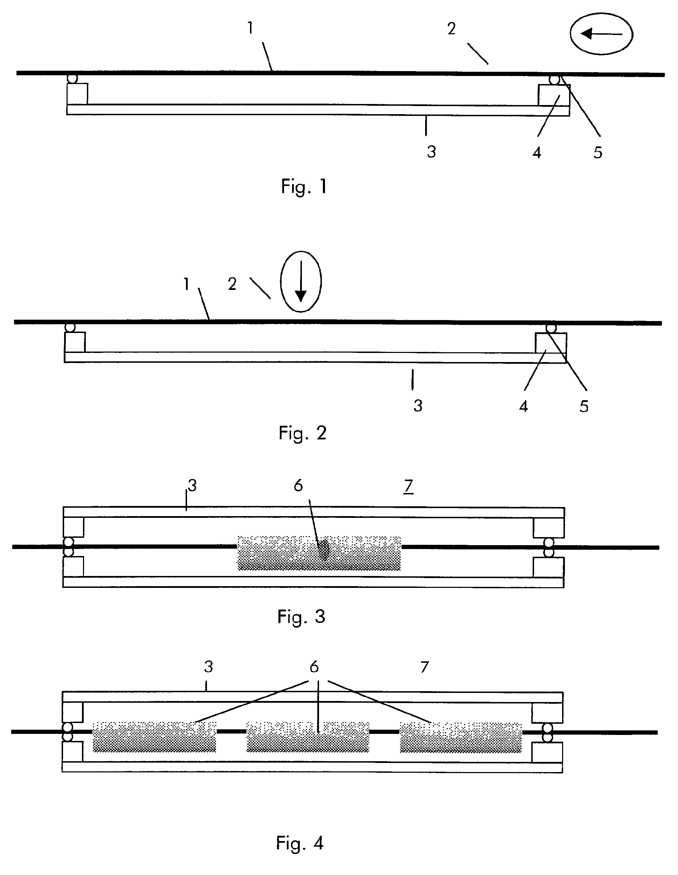

Figure 1 and 2 shows very schematic a device that can influence a fiber by strain. A support 3 has attached distance holders 4 with fixing point 5 at the top. A piece of fiber 1 comprising the Long Period Grating is fixed between the fixing points 5. A body 2 which can stress the fiber is arranged a way that the a power can be applied and rejected on the fiber.
In figure 1 the mechanical power is applied in direction of the fiber , in figure 2 the mechanical power is applied - as an example- at the middle of the fiber piece.
Any solution to strain the fiber by mechanical means can be used for the invention.

Figure 3 and 4 shows a device which is closed in form of a chamber 7. The chamber comprises one heating element 6 or several heating elements 6. The chamber can be temperature stabilized.

By heating or cooling one or several parts of the fiber 1 the behavior of the Long period grating is influenced.

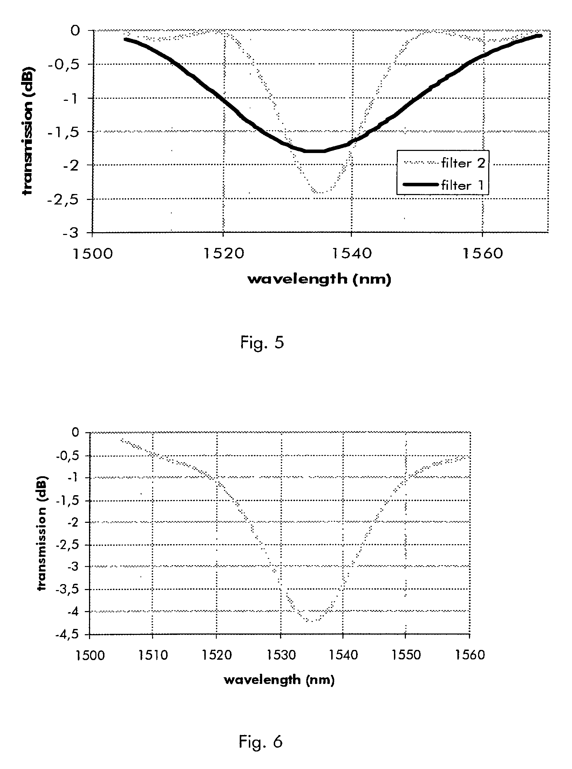

Fig. 5 explains one embodiment of the invention. A first long period fiber grating model is written in a piece of fiber . A second long period fiber grating model is written in the same fiber piece. The writing process of the long period fiber gratings are realized in a side by side writing or in a superimposition of the two gratings.

The spectral responses (peak)of the two filters are adjacent or overlap each others. The spectral responses of each filter are demonstrated by two different spectrum curves in the plot of figure 5. It is shown a graph representing the transmission over the wavelength.
One can see one filter shape (black) for the first long period fiber grating and a second shape (grey) for the second long period filter grating. The total filter shape of both curves superposed by each other iis illustrated in figure 6. When a strain and/or a ambient temperature is applied to the filter comprising the two gratings, the two individual peaks of the individual shapes are moving differently. This is due to the fact that the cladding mode couples to the fundamental mode in a different way. The coupling depends from λ' of the Bragg gratings where one chosen period will give a peak in telecom window corresponding to the coupling of the fundamental mode with a given cladding mode m. As a result the slope of the total filter shape is slowly changing. A tunable slope can be obtained. Characteristics of this slope is chosen through the design of the two filters.

The long period grating filter sensitivity to strain and temperature depends on the host fiber and the cladding mode coupled to the fundamental mode LPOm (i.e The period of the filter).

For long period grating fabricated into SMF28 fiber experiments shows the rsult:

| **Period λ'** | **strain** | **Temperature** |
|---|---|---|
| 285 µm | 1,1 pm/µdef | 85,8 pm/°C |
| 340 µm | 0,4 pm/µdef | 69,5 pm/°C |
| 460 µm | -0,3 pm/µdef | 50,1 pm/°C |
| 630 µm | -0,6 pm/µdef | 43,9 pm/°C |

Another measurement that a strain of 100g or a variation on temperature of 50°C will not introduce the same shift into the filter

| Type | Period | Δlambda for tension of 100g | Δlambda for ΔT of 50°C |
|---|---|---|---|
| A | 285 µm | 1,2 nm | 4,3 nm |
| B | 340 µm | 0,45 nm | 3,5 nm |
| C | 460 µm | -0,33 nm | 2,5 nm |
| D | 630 µm | -0,7 nm | 2,2 nm |

For example two LPG of different types SMF28 with grating A and SMF28 with grating D are written in the fiber. The spectral response of the resulting filter give a shape like the curve in figure 6. If we apply a strain using a piezo element of 300 g on the filter, one filter type A will move toward red light by +3,6 nm and the other filter type D will move toward bleu light by - 2,1 nm.

The result is a change on the total shape . The slope of shape of the useful bandwidth will change. Tunability is obtained using temperature sensitivity and additional heating or cooling mean.

The example with SMF28 fibers does not limit the invention to a use of this fibers. Any kind of optical fiber or more broader optical waveguides can be used to achieve the inventional result.
Also another period giving increase sensitivity to strain and/or temperature is useful to achieve a inventional solution.

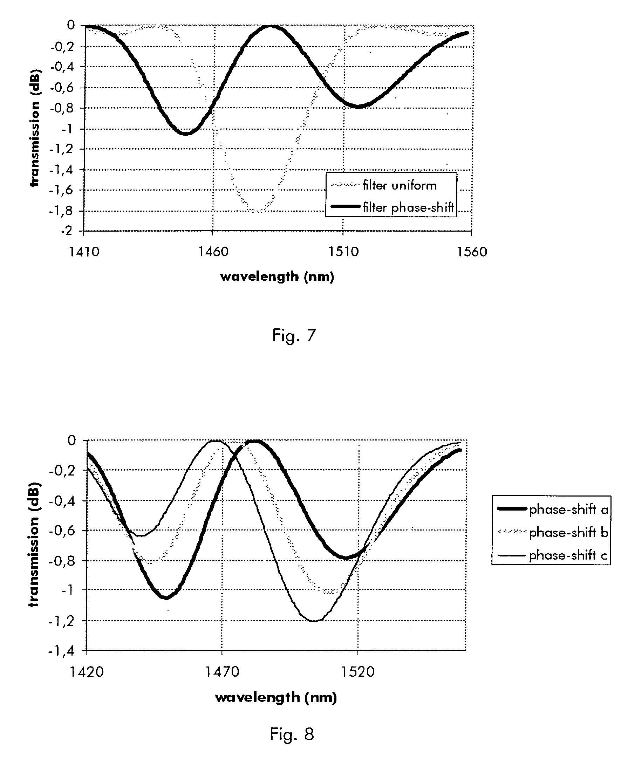

In an other inventional embodiment the two different gratings are obtained by the introduction of a phase shift in the middle of the long period grating which creates two separated filters with the same period.
The insertion of a phase shift in the middle of a LPG filter creates a band pass function into the stop band of a uniform filter. This creates two peaks with given strength, depth and central wavelength, depending on the value of the phase shift. The phase shift has a range of 0 to 2π+2kπ [k∈N].
This is illustrated in figure 7 by the black line which is a filter with a phase shift of 120°. For a comparison the filter shape of a single uniform filter is drawn in grey.
Figure 8 explains the shift in the filter shapes with different inserted phase shifts a,b,c.
When the value of the phase shift is tuned, the shape of the two peaks change. A tunable slope can be obtained. Characteristics of this slope is chosen through the design of the filter and the choice on the nominal phase shift.
The tune the filter the phase shift is modified by strain or temperature. A small part of the filter can be heated or stressed. This small part in which the phase is changed is around 1 mm.

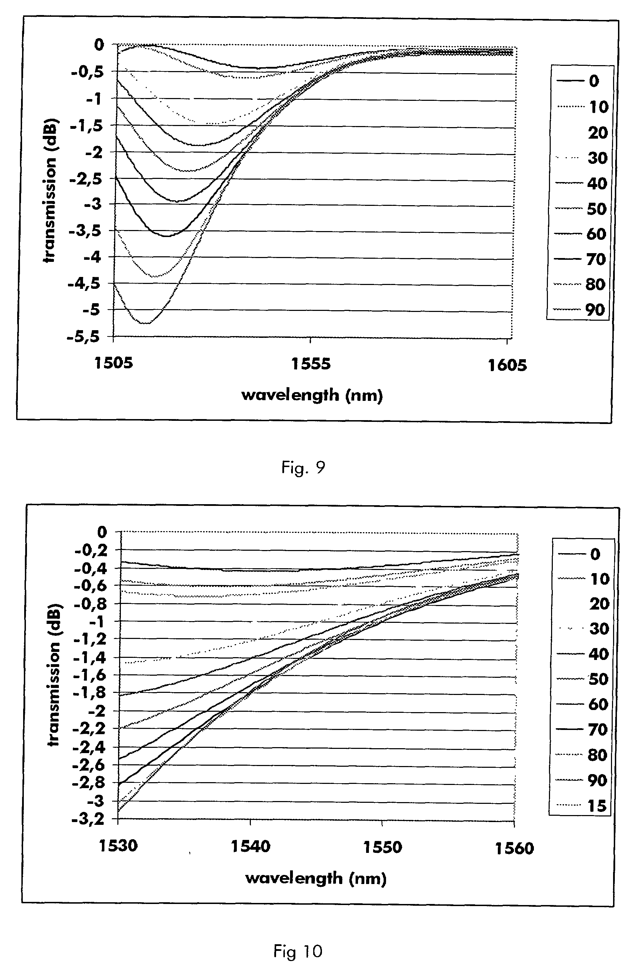

Fig 9 shows the change in the filter shape of a filter with inserted phase shift . The phase shift differs from 0 degree to 90 degrees.
Fig.10: illustrate as an example the capability of the tunable phase shift to generate a 3dB slope tunable attenuation over 30 nm on 1530-1560 nm bandwidth in dependence of the value pf phase shift applied. It is a zoom on the of the spectrum that can be used as a tunable slope filter

In all theses cases, the insertion loss is low and the method allows very low polarization dispersion losses (<0,05 dB).

## Claims

1. An optical filter device comprising:
a support frame for supporting a length of optical waveguide,
a waveguide grating comprising a length of optical waveguide including an optical grating where at least two different long period gratings are written in the same part of the length of optical waveguide,
the grating is attached to the support at the opposite sides of the grating.

2. A tunable optical filter device according to claim 1
with at least one mean influencing the optical waveguide by temperature.

3. A tunable optical filter device according to claim 1, with at least one mean for influencing the optical waveguide by stress.

4. A tunable optical filter device according to claim 1 where the two long period gratings are written with spectrum overlapping each others.

5. A tunable optical filter device according to claim 1 where the two long period gratings are separated by a phase shift in the length of the optical waveguide.

6. Method for tuning an optical filter in the wavelength using a length of optical waveguide including an optical grating where two different long period gratings are written in the same part of the length of optical waveguide, changing temperature of the said waveguide at least at one position of the length of the waveguide.

7. Method for tuning an optical filter in the wavelength using a length of optical waveguide including an optical grating where two different long period gratings are written in the same part of the length of optical waveguide, changing stress in the said waveguide at least at one position of the length of the waveguide.

8. Communication system using the device of claim 1.
